(19) Europäisches Patentamt
European Patent Office
Office européen des brevets

(11) **EP 4 002 237 A1**

(12) **EUROPÄISCHE PATENTANMELDUNG**

(43) Veröffentlichungstag:
**25.05.2022 Patentblatt 2022/21**

(21) Anmeldenummer: **20206974.6**

(22) Anmeldetag: **11.11.2020**

(51) Internationale Patentklassifikation (IPC):
**G06Q 10/06** (2012.01)   **G06Q 50/06** (2012.01)

(52) Gemeinsame Patentklassifikation (CPC):
**G06Q 10/06315; G06Q 50/06**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Schulte, Sascha**
**91315 Höchstadt (DE)**

(54) **VERFAHREN ZUM VERTEILEN EINER ANGEFORDERTEN ODER AUFZUNEHMENDEN ELEKTRISCHEN GESAMTLEISTUNG IN EINEM VIRTUELLEN KRAFTWERK UND VIRTUELLES KRAFTWERK**

(57)    Die Erfindung betrifft ein Verfahren zum Verteilen einer angeforderten oder aufzunehmenden elektrischen Gesamtleistung auf wenigstens zwei Energiesysteme eines virtuellen Kraftwerks und ein virtuelles Kraftwerk. Zunächst wird eine bereitstellbare oder aufnehmbare Einzelleistung eines jeden Energiesystems in Abhängigkeit eines maximalen Bewertungswerts, der die Einzelleistung des Energiesystems bewertet, ermittelt. Anschließend werden die Energiesysteme bestimmt, welche bei einer minimalen Deckung der angeforderten oder aufzunehmenden Gesamtleistung eine maximale Summe der Bewertungswerte aufweisen. Anschließend wird ein gemeinschaftlicher Gesamtbewertungswert ermittelt, bei dem die Summe der Einzelleistungen der bestimmten Energiesysteme der angeforderten oder aufzunehmenden Gesamtleistung entspricht. In einem nächsten Schritt werden die dem Gesamtbewertungswert zugeordneten Einzelleistungen jedes bestimmten Energiesystems ermittelt. Anschließend erfolgt das Verteilen der angeforderten oder aufzunehmenden Gesamtleistung auf die Energiesysteme gemäß den zugeordneten Einzelleistungen. Das virtuelle Kraftwerk umfasst wenigstens zwei Energiesysteme, welche eingerichtet sind, das Verfahren zum Verteilen einer angeforderten oder aufzunehmenden elektrischen Gesamtleistung auszuführen.

FIG 1

EP 4 002 237 A1

**Beschreibung**

Die Erfindung betrifft ein Verfahren zum Verteilen einer angeforderten oder aufzunehmenden elektrischen Gesamtleistung auf wenigstens zwei Energiesysteme eines virtuellen Kraftwerks und ein virtuelles Kraftwerk.

In einem Energiesystem sind verschiedene Arten von Energieerzeugern, Energieverbrauchern und Energiespeichern miteinander elektrisch verbunden. Aufgrund der Dezentralisierung der Energieversorgung wächst die Vielfalt der in einem Energieversorgungsnetz angeordneten Energiesysteme noch weiter. Als Energieerzeuer werden derzeit inbesondere Kraftwerke, Dieselaggregate, aber auch Photovoltaikanlagen und Windkrafträder eingesetzt. Auch das Energiespeichern kann auf unterschiedliche Weisen, insbesondere in Batteriespeichern oder mittels chemischer Umwandlung, insbesondere der Elektrolyse, erfolgen.

Auch die Größe unterschiedlicher Energiesysteme kann sich stark unterscheiden: Ein Energiesystem kann sich auf die elektrischen Komponenten eines Gebäudes erstrecken. Es kann sich ebenso auf Städte oder einzelne Stadtquartiere erstrecken.

Eine in einem Energieversorgungsnetz angeforderte Leistung oder Energiemenge wird derzeit mittels einer Lastverteilung (engl.: load balancing) derart gesteuert verteilt, dass Leistungsspitzen vermieden werden und einzelne Energiesysteme nicht über- oder unterbelastet werden. Die Steuerung erfolgt derzeit typischerweise zentral. Die Steuerung erfolgt basierend auf numerischen Optimierungen basierend auf einer Vielzahl von Parametern der elektrischen Komponenten.

Nachteilig ist eine solche auf numerischen Optimierungen beruhende Steuerung in der Vorbereitung, Wartung und Ausführung aufwendig, teuer und empfindlich gegenüber Störungen.

Die Einbindung kleiner dezentraler Komponenten, welche teilweise mit einer hohen Dynamik betrieben werden, in solche numerischen Optimierungen für eine zentrale Steuerung erfordert, insbesondere bei einer unbekannten Topologie, das Wissen eines Fachmanns. Dieses Einbinden ist nachteilig schwer zu automatisieren. Somit ist das Einbinden kleiner dynamischer dezentraler Komponenten, insbesondere einzelner Heimspeicher oder kleiner Photovoltaikanlagen eines Privathaushaltes, in eine zentral gesteuerte Lastverteilung in einem Energieversorgungsnetz nachteilig aufwendig und teuer.

Es ist bekannt, Energiesystemkomponenten mittels einer festen, sich während des Betriebs nicht verändernden, Bewertungszahl zu bewerten und die Verteilung einer angeforderten oder aufzunehmenden Leistung basierend auf der einer Energiesystemkomponente zugeordneten festen Bewertungszahl durchzuführen.

Nachteilig kann es hierbei zu einer starken Belastung kleiner Energiesysteme, insbesondere zu einer regelmäßigen Belastung bis zu einer maximal bereitstellbaren Leistung des Energiesystems, kommen. Nachteilig erhöht dies insbesondere eine Alterung oder einen Wartungsaufwand des Energiesystems.

Aufgabe der vorliegenden Erfindung ist es, Verfahren zum Verteilen einer angeforderten oder aufzunehmenden elektrischen Gesamtleistung auf wenigstens zwei Energiesysteme eines virtuellen Kraftwerks und ein virtuelles Kraftwerk anzugeben, welches die genannten Nachteile überwindet.

Die Aufgabe wird erfindungsgemäß mit einem Verfahren gemäß Anspruch 1 und einem virtuellen Kraftwerk gemäß Anspruch 12 gelöst.

Das erfindungsgemäße Verfahren zum Verteilen einer angeforderten oder aufzunehmenden elektrischen Gesamtleistung auf wenigstens zwei Energiesysteme eines virtuellen Kraftwerks umfasst mehrere Schritte. Zunächst erfolgt das Ermitteln einer bereitstellbaren oder aufnehmbaren Einzelleistung eines jeden Energiesystems in Abhängigkeit eines maximalen Bewertungswerts, der die Einzelleistung des Energiesystems bewertet. In einem nächsten Schritt werden die Energiesysteme bestimmt, welche bei einer minimalen Deckung der angeforderten oder aufzunehmenden Gesamtleistung eine maximale Summe der Bewertungswerte aufweisen. Anschließend wird ein gemeinschaftlicher Gesamtbewertungswert ermittelt, bei dem die Summe der Einzelleistungen der bestimmten Energiesysteme der angeforderten oder aufzunehmenden Gesamtleistung entspricht. In einem nächsten Schritt erfolgt das Ermitteln der dem Gesamtbewertungswert zugeordneten Einzelleistungen jedes bestimmten Energiesystems. In einem nächsten Schritt erfolgt das Verteilen der angeforderten oder aufzunehmenden Gesamtleistung auf die Energiesysteme gemäß den zugeordneten Einzelleistungen.

Als bestimmte Energiesysteme werden die Energiesysteme verstanden, welche bei der minimalen Deckung der angeforderten oder aufzunehmenden Gesamtleistung beteiligt sind. In anderen Worten sind die bestimmten Energiesysteme die an der Erfüllung der Leistungsanforderung teilnehmenden Energiesysteme.

Das erfindungsgemäße virtuelle Kraftwerk umfasst wenigstens zwei Energiesysteme, welche derart eingerichtet sind, dass das erfindungsgemäße Verfahren zum Verteilen einer angeforderten oder aufzunehmenden elektrischen Gesamtleistung ausführbar ist.

Vorteilhaft wird durch das erfindungsgemäße Verfahren erreicht, dass das Verteilen einer angeforderten oder aufzunehmenden elektrischen Gesamtleistung gleichmäßig über die Energiesysteme in Abhängigkeit ihrer Bewertungswerte erfolgt. Es wird vorteilhaft vermieden, dass eine ungünstige Verteilung auf dieselben Systeme, insbesondere auf kleine Systeme mit niedriger Leistung, erfolgt.

Das Verfahren wird für eine erneute Anfrage erneut durchgeführt. In anderen Worten wird der maximale Bewertungswert und der Gesamtbewertungswert für eine erneute Anfrage über eine angeforderte oder aufzunehmende elektrische Gesamtleistung neu ermittelt. Vorteilhaft wird dadurch erreicht, dass die Bewertungswerte eine selbstjustierende Auswirkung auf das virtuelle Kraftwerk haben. Das heißt, die Bewertungswerte müssen nicht exakt eingestellt werden. Wenn ein Wert ein Energiesystem nicht exakt genug abgebildet hat, wird die Regelung des virtuellen Kraftwerks derart durchgeführt, dass dieses Energiesystem ungünstig betrieben wird. In einem nächsten Regelungsschritt erfolgt eine erneute Bewertung des Energiesystems mit einem Bewertungswert. Dieser wird das Energiesystem nun als weniger geeignet als im vorherigen Schritt bewerten. Somit wird dieses Energiesystem in dem nächsten Regelungsschritt exakter bewertet. Vorteilhaft wird das Verfahren zum Verteilen einer elektrischen Energie somit robust und einfach. Eine exakte Bewertung in einem ersten Regelungsschritt wird vorteilhaft nicht benötigt.

In einer vorteilhaften Ausgestaltung und Weiterbildung der Erfindung steigt der Bewertungswert mit zunehmender bereitstellbarer Einzelleistung des Energiesystems bis zu einer maximalen bereitstellbaren Leistung und einem maximalen Bewertungswert an. In anderen Worten heißt das, dass sich das System bei einer großen bereitstellbaren Einzelleistung als sehr geeignet einschätzt, wohingegen sich das Energiesystem bei einer niedrigen bereitstellbaren Einzelleistung als weniger geeignet einschätzt.

Besonders vorteilhaft kann der Anstieg des Bewertungswert mit zunehmender bereitstellbarer Einzelleistung linear beschrieben werden. Vorteilhaft stellt dies eine vereinfachte Darstellung des Bewertungswerts dar, deren Genauigkeit für das Verteilen der angeforderten oder aufzunehmenden elektrischen Gesamtleistung noch ausreichend ist.

In einer weiteren vorteilhaften Ausgestaltung und Weiterbildung der Erfindung nimmt der Bewertungswert mit zunehmender bereitstellbarer Einzelleistung exponentiell zu. Insbesondere ist es vorteilhaft möglich, ein nichtlineares Verhalten von Komponenten der Energiesysteme mittels einer exponentiellen Zunahme zu beschreiben. Insbesondere für Energiesystemkomponenten, wie beispielsweise einen Umrichter, ist ein exponentiell ansteigendes Verhalten des Bewertungswerts eine ausreichend genaue Beschreibung, um eine gleichmäßige Verteilung einer angeforderten oder bereitzustellenden Gesamtleistung zu ermöglichen.

In einer weiteren vorteilhaften Ausgestaltung und Weiterbildung der Erfindung steigt der Bewertungswert mit zunehmender aufnehmbarer Einzelleistung bis zu einer maximal aufnehmbaren Leistung und einem maximalen Bewertungswert an. In anderen Worten wird ein Energiespeicher, insbesondere ein Batteriespeicher, der entladen ist und somit viel Energie aufnehmen kann, mit einem hohen Bewertungswert bewertet. Energiespeicher in einem nahezu komplett geladenen Zustand, werden mit einer niedrigen Bewertungskennzahl bewertet. Vorteilhaft lässt sich somit das Verteilen einer aufzunehmenden elektrischen Gesamtleistung auf mehrere Energiesysteme gleichmäßig durchführen.

In einer weiteren vorteilhaften Ausgestaltung und Weiterbildung der Erfindung nimmt der Bewertungswert einen maximalen Bewertungswert zwischen einer minimalen und einer maximalen aufnehmbaren Leistung an. In anderen Worten wird mittels des Bewertungswerts abgebildet, dass ein Energiespeicher ein Speicheroptimum hat. Vorteilhaft wird eine Verteilung einer aufzunehmenden Energie somit insbesondere innerhalb dieses Optimierung erfolgen.

In einer weiteren vorteilhaften Ausgestaltung und Weiterbildung der Erfindung umfasst ein Energiesystem Energiesystemkomponenten, wobei als Energiesystemkomponenten eine Erzeugereinheit, eine Energieverbrauchereinheit oder eine Energiespeichereinheit eingesetzt werden. In anderen Worten umfasst das virtuelle Kraftwerk mehrere Energiesysteme, wobei die Energiesysteme wiederum unterschiedliche Komponenten aufweisen können. Vorteilhaft ist es aufgrund der Bewertungskennzahl und dem Bestimmen der teilnehmenden Energiesysteme möglich, auch bei komplexen virtuellen Kraftwerken eine gleichmäßige Verteilung einer aufzunehmenden oder angeforderten elektrischen Gesamtleistung zu verteilen.

In einer vorteilhaften Ausgestaltung und Weiterbildung der Erfindung werden zur Bestimmung der Bewertungswerte vorbestimmte Bewertungswertfunktionen verwendet, welche Bewertungswerte in Abhängigkeit einer physikalischen Eingabevariablen, einer kostenabhängigen Eingabevariablen und/oder einer emissionsabhängigen, insbesondere einer Kohlenstoffdioxidemissions-abhängigen, Eingabevariablen bereitstellen. In anderen Worten können die Bewertungswertfunktionen vorteilhaft von physikalischen und nicht-physikalischen Eigenschaften abhängen. Insbesondere können somit vorteilhaft auch empirische Erfahrungswerte oder Kostenfunktionen in die Verteilung einer angeforderten oder bereitzustellenden elektrischen Gesamtleistung einfließen, ohne dass eine aufwändige Optimierung stattfinden müsste.

In einer weiteren vorteilhaften Ausgestaltung und Weiterbildung der Erfindung werden als Eingangsvariable der Energiespeichereinheit ein Ladezustand und/oder eine Speichertemperatur und/oder eine Umgebungstemperatur und/oder ein Alterungszustand verwendet. Vorteilhaft erfolgt somit das Zuordnen eines Bewertungswerts zu einem Energiespeicherzustand mit hoher Genauigkeit. Dies ermöglicht vorteilhaft ein gleichmäßiges Verteilen einer aufzunehmenden oder bereitzustellenden elektrischen Gesamtleistung.

In einer weiteren vorteilhaften Ausgestaltung und Weiterbildung der Erfindung wird das Verfahren computergestützt durchgeführt. Vorteilhaft kann das Verteilen der angeforderten oder bereitzustellenden Leistung somit ohne das Einwirken menschlichen Handelns während der Verteilung durchgeführt werden. Auch ein sich veränderndes virtuelles Kraftwerk, insbesondere durch ein Hinzukommen von Energiesystemen, kann computergestützt ohne das Eingreifen eines Fachmanns anhand des Bewertungswerts, abgebildet und in die Verteilung eingebunden werden. Vorteilhaft kann somit das Verteilen der aufzunehmenden oder bereitzustellenden elektrischen Leistung in einfacher Weise an ein sich veränderndes System angepasst werden.

In einer weiteren vorteilhaften Ausgestaltung und Weiterbildung der Erfindung nimmt der Bewertungswert einen Wert im Bereich von 0 bis 1 an. Typischerweise wird mit einem Bewertungswert von 1 ein sehr geeignetes Energiesystem beschrieben, mit einem Bewertungswert von 0 wird ein nicht geeignetes Energiesystem beschrieben.

In einer weiteren vorteilhaften Ausgestaltung und Weiterbildung der Erfindung umfasst das virtuelle Kraftwerk wenigstens eine Steuereinheit, die ausgestaltet ist zum Durchführen des erfindungsgemäßen Verfahrens. In einem virtuellen Kraftwerk mit einer verzweigten Struktur, also insbesondere, wenn ein Energiesystem wiederum wenigstens ein Energiesubsystem aufweist, kann eine Steuereinheit auf jeder Ebene des virtuellen Kraftwerks angeordnet sein. Das Verfahren kann also vorteilhaft parallel auf mehreren Ebenen des virtuellen Kraftwerks, in anderen Worten kaskadenartig, ausgeführt werden. Somit können vorteilhaft auch virtuelle Kraftwerke mit einem komplexen Aufbau durch ein einfaches Verfahren geregelt werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:

Figur 1     ein virtuelles Kraftwerk mit vier Energiesystemen und einer Recheneinheit;

Figur 2     ein Bewertungswert-Leistungs-Diagramm;

Figur 3     ein schematisches Verfahrensfließbild zum Verteilen einer angeforderten oder aufzunehmenden Leistung.

In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis im Verhältnis größer dimensioniert dargestellt sein.

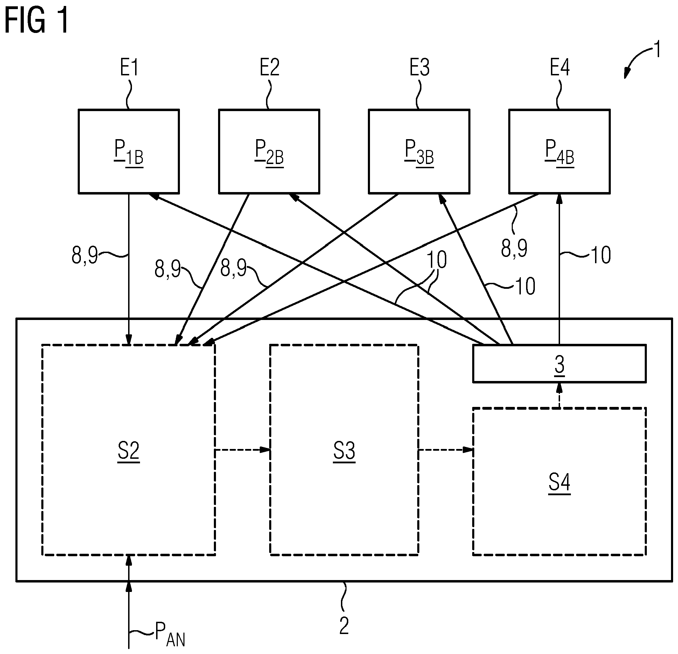

Figur 1 zeigt ein virtuelles Kraftwerk 1 mit vier Energiesystemen: Einem ersten Energiesystem E1, einem zweiten Energiesystem E2, einem dritten Energiesystem E3 und einem vierten Energiesystem E4. Das erste Energiesystem E1, das zweite Energiesystem E2 und das dritte Energiesystem E3 sind Batteriespeicher. Sie können demnach elektrische Leistung abgeben oder speichern. Das vierte Energiesystem E4 ist ein Dieselaggregat, was elektrische Leistung bereitstellen kann. Das virtuelle Kraftwerk 1 weist weiterhin eine Recheneinheit 2 auf. Die Recheneinheit 2 umfasst eine Steuereinheit 3. Die Energiesysteme sind über eine Datenübertragungsverbindung mit der Recheneinheit 2 verbunden. Die Datenübertragungsverbindung kann kabelgebunden oder kabellos erfolgen.

Zunächst wird für jedes Energiesystem eine bereitstellbare oder aufnehmbare Einzelleistung in Abhängigkeit eines maximalen Bewertungswerts, der die Einzelleistung des jeweiligen Energiesystems bewertet, ermittelt. In diesem Ausführungsbeispiel wird eine Leistung $P_{AN}$ von 40 kW von dem virtuellen Kraftwerk 1 angefordert.

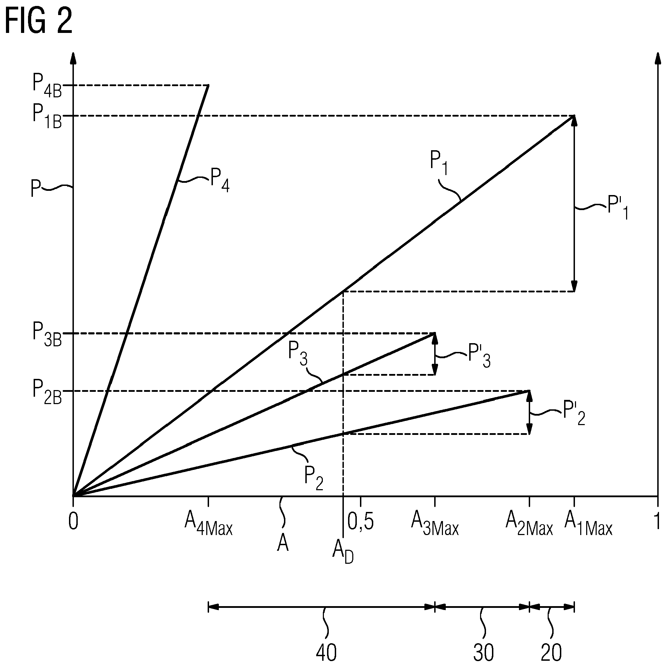

Figur 2 zeigt ein Bewertungswert-Leistungs-Diagramm für die vier Energiesysteme des Ausführungsbeispiels aus Figur 1. Das erste Energiesystem E1 hat eine bereitstellbare erste Leistung von $P_{1B}$, insbesondere von 50 kW bei einem maximalen Bewertungswert $A_{1Max}$ von 0,8. Das zweite Energiesystem E2 hat eine bereitstellbare zweite Leistung $P_{2B}$, insbesondere von 10 kW bei einem maximalen Bewertungswert $A_{2Max\ von}$ 0,7. Das dritte Energiesystem E3 hat eine bereitstellbare dritte Leistung $P_{3B}$, insbesondere von 20 kW bei einem maximalen Bewertungswert $A_{3Max}$ von 0,6. Das vierte Energiesystem E4 hat eine bereitstellbare Leistung $P_{4B}$ von 60 kW bei einem maximalen Bewertungswert $A_{4Max}$ von 0,3.

Zunächst werden an die Recheneinheit 2 die erste bereitstellbaren Leistung $P_{1B}$, die zweite bereitstellbaren Leistung $P_{2B}$, die dritte bereitstellbaren Leistung $P_{3B}$ und die vierte bereitstellbaren Leistung $P_{4B}$ übermittelt.

In einem nächsten Schritt, in Figur 1 als S2 bezeichnet, werden die Energiesysteme bestimmt, welche bei einer minimalen Deckung der angeforderten oder aufzunehmenden Gesamtleistung eine maximale Summe der Bewertungswerte aufweisen. Es werden also in anderen Worten die Energiesysteme ausgewählt, welche bei einer maximalen Summe der Bewertungswerte, die angeforderte Leistung minimal abdecken können.

Allgemein kann der Zusammenhang zwischen der bereitstellbaren Einzelleistung P' und dem Bewertungswert A für lineare Leistungs-Bewertungswert-Funktionen mittels Gleichung 1 dargestellt werden. Funktion höherer Ordnung werden der Übersicht halber hier nicht beschrieben. Sie können analog durch eine Funktion beschrieben werden.

$$P_n'(A_D) = P_{n,B} - A_D * \frac{P_{n,B}}{A_{n,Max}},$$    Gleichung 1

wobei die Einzelleistung $P_n$' für das n-te Energiesystem bestimmt wird und $A_D$ der Gesamtbewertungswert für eine Deckung der angeforderten Leistung ist.

Somit kann nun graphisch oder mittels einer Ermittlung von Bereichen bestimmt werden, welche Energiesysteme beteiligt sind. In Figur 2 wird diese Ermittlung beispielhaft für die angeforderte Leistung von 40 kW aufgezeigt.

Es wird zunächst ermittelt, welche Leistung P' zwischen unterschiedlichen Bewertungswerten abgeben werden kann. Beispielsweise ist aus Figur 2 ersichtlich, dass das erste Energiesystem in einem ersten Bereich 20, in dem der Bewertungswert von $A = A_{2Max} = 0,7$ bis $A = A_{1Max} = 0,8$ bestimmt ist, 5 kW bereitstellen kann. In einem zweiten Bereich 30 zwischen $A = A_{3Max} = 0,6$ und $A = A_{2Max} = 0,7$ kann das erste Energiesystem E1 10 kW und das zweite Energiesystem E2 5 kW Leistung bereitstellen. Insgesamt können in diesem zweiten Bereich also 15 kW Leistung bereitgestellt werden. Addiert man die bereitstellbare Leistung des ersten und zweiten Bereichs, so können 20 kW bereitgestellt werden. Nimmt man nun auch noch einen dritten Bereich 40 zwischen $A = A_{4Max} = 0,3$ und $A = A_{3Max} = 0,6$ hinzu, so können das erste Energiesystem E1 weitere 10 kW elektrische Leistung bereitstellen, das zweite Energiesystem E2 kann 5 kW bereitstellen und das dritte Energiesystem E3 kann 10 kW bereitstellen. Insgesamt können in diesem Bereich 25 kW bereitgesellt werden. In allen drei Bereich zusammen können demnach 45 kW bereitgestellt werden. Für die angeforderte Leistung von 40 kW werden somit das erste Energiesystem E1, das zweite Energiesystem E2 und das dritte Energiesystem E3 benötigt. Das vierte Energiesystem wird nicht benötigt.

In einem nächsten Schritt S3 wird ein gemeinschaftlicher Gesamtbewertungswert ermittelt, bei dem die Summe der Einzelleistungen der bestimmten Energiesysteme der angeforderten Gesamtleistung $P_{AN}$ entspricht. Wie Gleichung 2 zeigt, müssen die Einzelleistungen P' die angeforderte Leistung $P_{AN}$ bei dem Gesamtbewertungswert $A_D$ abdecken.

$$P_{AN} = \sum_{n=1,\ldots 4} P_n'(A_D) \qquad\qquad \text{Gleichung 2}$$

Durch Einsetzen der Gleichung 1 in die Gleichung 2 erhält man folgende, nach $A_D$ aufgelöste, Gleichung 3 zum Ermitteln des Gesamtbewertungswertes:

$$A_D = \frac{\sum_{n=1,2,3} P_{nB} - P_{AN}}{\sum_{n=1,2,3} \frac{P_{nB}}{A_{nMax}}} \qquad\qquad \text{Gleichung 3}$$

Insgesamt kann bei einem Gesamtbewertungswert $A_D$ von 0,45 die angeforderte Leistung von 40 kW gedeckt werden.

In einem nächsten Schritt S4 wird über das Einsetzen des Gesamtbewertungswerts in Gleichung 1 oder graphisch ermittelt, welche Einzelleistung $P_n'$ die drei beteiligten Energiesysteme bereitstellen.

Figur 2 zeigt, wie die Einzelleistungen graphisch ermittelt werden können. Zunächst wird ermittelt, welche Leistung P' zwischen unterschiedlichen Bewertungswerten abgeben werden kann. Das erste Energiesystem E1 kann zwischen dem maximalen Bewertungswert $A_{1Max}$ und dem Gesamtbewertungswert $A_D$ eine erste Einzelleistung $P_1'$ von 20 kW abgeben. Das zweite Energiesystem E2 kann zwischen dem maximalen Bewertungswert $A_{2Max}$ und dem Gesamtbewertungswert $A_D$ eine zweite Einzelleistung $P_2'$ von 10 kW abgeben. Das dritte Energiesystem E3 kann zwischen dem maximalen Bewertungswert $A_{3Max}$ und dem Gesamtbewertungswert $A_D$ eine dritte Einzelleistung $P_3'$ von 10 kW abgeben. Das vierte Energiesystem E4 kann bei dem Gesamtbewertungswert $A_D$ von 0,45 keine Einzelleistung $P_4'$ bereitstellen.

Die Schritte S2, S3 und S4 werden in diesem Beispiel computergestützt in einer Recheneinheit 2 durchgeführt.

Anschließend wird die angeforderte Leistung $P_{AN}$ aus dem ersten Energiesystem, aus dem zweiten Energiesystem und aus dem dritten Energiesystem gemäß der ermittelten Verteilung bereitgestellt.

Wird eine Speicheranfrage an das virtuelle Kraftwert übermittelt, so wird das Verfahren analog zu dem ersten Beispiel ausgeführt. Es muss lediglich berücksichtigt werden, dass dann Bewertungswerte jedes Energiesystems für eine Energiespeicherung verwendet werden. Diese unterscheiden sich von den Bewertungswerten für eine Energieabgabe und sollten somit nicht innerhalb einer Analyse vermischt werden. Beispielsweise hat das vierte Energiesystem E4 einen Bewertungswert von 0 für eine Energiespeicherung, da es sich um ein Dieselaggregat handelt, welches nicht für das Speichern elektrischer Energie geeignet ist.

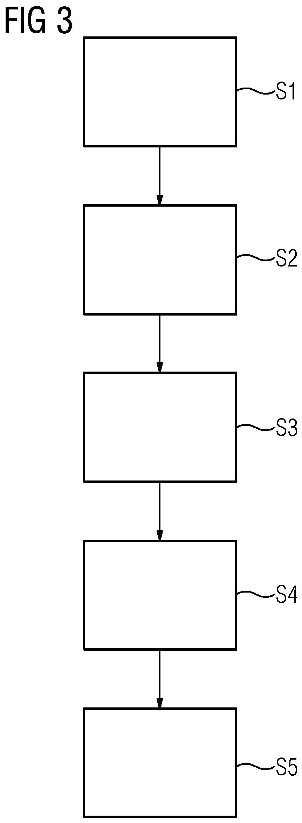

Figur 3 zeigt ein schematisches Verfahrensfließbild zum Verteilen einer angeforderten oder aufzunehmenden Leistung. In einem ersten Schritt S1 wird eine bereitstellbaren oder aufnehmbaren Einzelleistung eines jeden Energiesystems in Abhängigkeit eines maximalen Bewertungswerts ermittelt. Der Bewertungswert bewertet die maximale Einzelleistung des Energiesystems. In einem zweiten Schritt S2 werden die Energiesysteme bestimmt, welche bei einer minimalen Deckung der angeforderten oder aufzunehmenden Gesamtleistung eine maximale Summe der Bewertungswerte aufweisen. In anderen Worten werden die Energiesysteme bestimmt, welche für eine Verteilung der angeforderten oder aufzunehmenden Gesamtleistung infrage kommen. In einem dritten Schritt S3 wird ein gemeinschaftlicher Gesamtbewertungswert ermittelt, bei dem die Summe der Einzelleistungen der bestimmten Energiesysteme der angeforderten oder aufzunehmenden Gesamtleistung entspricht. In diesem Schritt wird also ein Gesamtbewertungswert, welcher für jedes teilnehmende Energiesystem erfüllbar ist, bestimmt. In einem vierten Schritt S4 wird basierend auf dem Gesamtbewertungswert eine Einzelleistung jedes teilnehmenden Energiesystems ermittelt. Anschließend wird in einem fünften Schritt S5 die angeforderte oder aufzunehmenden Gesamtleistung auf die teilnehmende Energiesysteme gemäß den zugeordneten Einzelleistungen verteilt.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

Bezugszeichenliste

| | |
|---|---|
| 1 | Virtuelles Kraftwerk |
| 2 | Recheneinheit |
| 3 | Steuereinheit |
| 8 | maximaler Bewertungswert |
| 9 | bereitstellbare Einzelleistung |
| 10 | zugeordnete Einzelleistung |
| 20 | erster Bereich |
| 30 | zweiter Bereich |
| 40 | dritter Bereich |
| E1 | erstes Energiesystem |
| E2 | zweites Energiesystem |
| E3 | drittes Energiesystem |
| E4 | viertes Energiesystem |
| $P_{1B}$ | erste bereitstellbare Leistung |
| $P_{2B}$ | zweite bereitstellbare Leistung |
| $P_{3B}$ | dritte bereitstellbare Leistung |
| $P_{4B}$ | vierte bereitstellbare Leistung |
| $P_{AN}$ | angeforderte Leistung |
| P | bereitstellbare Leistung |
| $P_1'$ | erste Einzelleistung |
| $P_2'$ | zweite Einzelleistung |
| $P_3'$ | dritte Einzelleistung |
| $P_4'$ | vierte Einzelleistung |
| A | Bewertungswert |
| $A_D$ | Gesamtbewertungswert |
| $A_{1Max}$ | maximaler Bewertungswert des ersten Energiesystems |
| $A_{2Max}$ | maximaler Bewertungswert des zweiten Energiesystems |
| $A_{3Max}$ | maximaler Bewertungswert des dritten Energiesystems |
| $A_{4Max}$ | maximaler Bewertungswert des vierten Energiesystems |
| S1 | Ermitteln einer bereitstellbaren Einzelleistung |
| S2 | Bestimmen der an einer Energieverteilung beteiligten Energiesysteme |
| S3 | Ermitteln eines gemeinschaftlichen Gesamtbewertungs-werts |
| S4 | Ermitteln der dem Gesamtbewertungswert zugeordneten Einzelleistung |
| S5 | Verteilen der angeforderten oder aufzunehmenden Gesamtleistung auf die Energiesysteme |

**Patentansprüche**

1. Verfahren zum Verteilen einer angeforderten oder aufzunehmenden elektrischen Gesamtleistung ($P_{AN}$) auf wenigstens zwei Energiesysteme (E1, E2, E3, E4) eines virtuellen Kraftwerks (1) mit mehreren Schritten:

   - Ermitteln einer bereitstellbaren oder aufnehmbaren Einzelleistung ($P_{1B}$, $P_{2B}$, $P_{3B}$, $P_{4B}$) eines jeden Energiesystems in Abhängigkeit eines maximalen Bewertungswerts ($A_{1Max}$, $A_{2Max}$, $A_{3Max}$, $A_{4MAx}$), der die Einzelleistung ($P_{1B}$, $P_{2B}$, $P_{3B}$, $P_{4B}$) des Energiesystems (E1, E2, E3, E4) bewertet,

- Bestimmen der Energiesysteme (E1, E2, E3), welche bei einer minimalen Deckung der angeforderten oder aufzunehmenden Gesamtleistung ($P_{AN}$) eine maximale Summe der Bewertungswerte (A) aufweisen,
- Ermitteln eines gemeinschaftlichen Gesamtbewertungswerts ($A_D$), bei dem die Summe der Einzelleistungen (P) der bestimmten Energiesysteme (E1, E2, E3) der angeforderten oder aufzunehmenden Gesamtleistung ($P_{AN}$) entspricht,
- Ermitteln der dem Gesamtbewertungswert ($A_D$) zugeordneten Einzelleistungen ($P_1'$, $P_2'$, $P_3'$) jedes bestimmten Energiesystems (E1, E2, E3),
- Verteilen der angeforderten oder aufzunehmenden Gesamtleistung ($P_{AN}$) auf die Energiesysteme (E1, E2, E3) gemäß den zugeordneten Einzelleistungen ($P_1'$, $P_2'$, $P_3'$).

2. Verfahren nach Anspruch 1, wobei der Bewertungswert (A) mit zunehmender bereitstellbarer Einzelleistung (P) bis zu einer maximalen bereitstellbaren Leistung ($P_{1B}$, $P_{2B}$, $P_{3B}$, $P_{4B}$) und einem maximalen Bewertungswert ($A_{1Max}$, $A_{2Max}$, $A_{3Max}$, $A_{4Max}$) steigt.

3. Verfahren nach Anspruch 2, wobei der Bewertungswert (A) mit zunehmender bereitstellbarer Einzelleistung (P) linear steigt.

4. Verfahren nach Anspruch 2, wobei der Bewertungswert (A) mit zunehmender bereitstellbarer Einzelleistung (P) exponentiell steigt.

5. Verfahren nach Anspruch 1, wobei der Bewertungswert (A) mit zunehmender aufnehmbarer Einzelleistung bis zu einer maximal aufnehmbaren Leistung und einem maximalen Bewertungswert steigt.

6. Verfahren nach Anspruch 1, wobei der Bewertungswert einen maximalen Bewertungswert (A) zwischen einer minimalen und einer maximalen aufnehmbaren Leistung annimmt.

7. Verfahren nach einem der vorhergehenden Ansprüche, wobei ein Energiesystem (E1, E2, E3, E4) Energiesystemkomponenten umfasst und als Energiesystemkomponenten eine Erzeugereinheit, eine Energieverbrauchereinheit oder eine Energiespeichereinheit eingesetzt werden.

8. Verfahren gemäß einem der vorhergehenden Ansprüche, wobei zur Bestimmung der Bewertungswerte (A) vorbestimmte Bewertungswertfunktionen verwendet werden, welche Bewertungswerte (A) in Abhängigkeit einer physikalischen Eingabevariablen bereitstellen, einer kostenabhängigen Eingabevariablen und/oder einer emissionsabhängigen, insbesondere einer Kohlenstoffdioxidemissions-abhängigen, Eingabevariablen, bereitstellen.

9. Verfahren gemäß Anspruch 8, wobei als Eingangsvariable der Energiespeichereinheit ein Ladezustand und/oder eine Speichertemperatur und/oder eine Umgebungstemperatur und/oder ein Alterungszustand verwendet werden.

10. Verfahren gemäß einem der vorhergehenden Ansprüche, wobei das Verfahren computergestützt durchgeführt wird.

11. Verfahren gemäß einem der vorhergehenden Ansprüche, wobei der Bewertungswert (A) einen Wert im Bereich von 0 bis 1 annimmt.

12. Virtuelles Kraftwerk (1) umfassend wenigstens zwei Energiesysteme (E1, E2, E3, E4) derart eingerichtet, dass ein Verfahren zum Verteilen einer angeforderten oder aufzunehmenden elektrischen Gesamtleistung ($P_{AN}$) gemäß einem der Ansprüche 1 bis 11 ausführbar ist.

13. Virtuelles Kraftwerk (1) nach Anspruch 12 mit wenigstens einer Steuereinheit (3) ausgestaltet zum Durchführen eines Verfahrens gemäß einem der Ansprüche 1 bis 11.

FIG 1

FIG 2

FIG 3

**Europäisches Patentamt**
**European Patent Office**
**Office européen des brevets**

# EUROPÄISCHER RECHERCHENBERICHT

**Nummer der Anmeldung**

EP 20 20 6974

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Anonymous: "Virtual power plant - Wikipedia", , 1. September 2020 (2020-09-01), XP055800440, Gefunden im Internet: URL:https://en.wikipedia.org/w/index.php?title=Virtual_power_plant&oldid=976225243 [gefunden am 2021-04-30] * Seite 1 - Seite 2 * ----- | 1-12 | INV. G06Q10/06 G06Q50/06 |
| X | EP 3 719 738 A1 (SIEMENS AG [DE]) 7. Oktober 2020 (2020-10-07) * Absatz [0020] * * Absatz [0041] - Absatz [0046] * ----- | 1-12 | |

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| München | 12. Mai 2021 | Hasubek, Bodo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 20 20 6974

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-05-2021

| Im Recherchenbericht angeführtes Patentdokument | Datum der Veröffentlichung | Mitglied(er) der Patentfamilie | Datum der Veröffentlichung |
|---|---|---|---|
| EP 3719738 A1 | 07-10-2020 | EP 3719738 A1<br>WO 2020200569 A1 | 07-10-2020<br>08-10-2020 |

EPO FORM P0461

Für nähere Einzelheiten zu diesem Anhang : siehe Amtsblatt des Europäischen Patentamts, Nr.12/82